(19) Europäisches Patentamt
European Patent Office
Office européen des brevets

(11) EP 1 889 868 A1

(12) EUROPÄISCHE PATENTANMELDUNG

(43) Veröffentlichungstag:
**20.02.2008 Patentblatt 2008/08**

(51) Int Cl.:
***C08K 3/00*** (2006.01) ***C08G 77/38*** (2006.01)
***C09D 183/06*** (2006.01)

(21) Anmeldenummer: **07113750.9**

(22) Anmeldetag: **03.08.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **16.08.2006 DE 102006038062**

(71) Anmelder: **Wacker Chemie AG**
**81737 München (DE)**

(72) Erfinder:
- **Herzig, Christian**
  **83329, Waging am See (DE)**
- **Weizhofer, Christine**
  **84375, Kirchdorf (DE)**

(74) Vertreter: **Gössmann, Christoph Tassilo et al**
**Wacker-Chemie GmbH,**
**Zentralbereich PML,**
**Hanns-Seidel-Platz 4**
**81737 München (DE)**

(54) **Polymerhaltige Zusammensetzung**

(57) Polymerhaltige Zusammensetzung enthaltend:
a) Polymer (I) enthaltend mindestens zwei funktionelle Gruppen ausgewählt aus der Gruppe β-Ketocarbonyl- und β-Enaminocarbonylfunktionen,
b) metallhaltige Verbindung (II) ausgewählt aus der Gruppe der Übergangsmetalle und der Lanthaniden sowie der 1., 2., 3. und 4. Hauptgruppe, außer dem in der 3. und 4. Hauptgruppe enthaltenen Bor und Kohlenstoff.

EP 1 889 868 A1

## Beschreibung

Die Erfindung betrifft Polymer-haltige Zusammensetzungen.

In CA 140: 128775 werden Schiffbasen aus 2,4-dihydroxybenzaldehyd und α, ω-Aminoalkylsiloxanen beschrieben, die mit Metallionen Chelate bilden. Diese sind Feststoffe mit definiertem Schmelzpunkt, der vom eingesetzten Aminosiloxan abhängt. Erst durch Folgereaktionen wie der Kondensation der phenolischen Endgruppen durch wasserentziehende Mittel oder der Veresterung mit 1,3-Bis(carboxypropyl)-tetramethyldisiloxan unter Bildung von Polyesterstrukturen werden polymere Chelatverbindungen erhalten.

Organische Polymere, die Bipyridin- oder Terpyridingruppen enthalten und auf Zusatz von Rutheniumverbindungen höhere Polymere, Copolymere oder auch dreidimensionale Netzwerke bilden, sind in PMSE-Preprints 2002, 86, 68 und 2002, 87, 209 beschrieben. Die polymergebundenen Pyridinliganden sind darin um das Rutheniumzentralatom koordiniert.

US 6469134 B2 beansprucht schaltbare Systeme aus polymergebundenen Bipyridin- oder Terpyridinliganden und Rutheniumzentralatomen, die je nach äußeren Einflüssen vernetzt oder flüssig sein können. Temperatur, pH-Wert oder ein äußeres elektrisches Feld können als Steuerparameter eingesetzt werden.

Aufgabe der Erfindung ist es, den Stand der Technik zu verbessern und insbesondere Polymere zu bilden, die einfach aufpolymerisiert und auch vernetzt werden können.

Gegenstand der Erfindung sind Polymer-haltige Zusammensetzung enthaltend:

a) Polymer (I) enthaltend mindestens zwei funktionelle Gruppen ausgewählt aus der Gruppe β-Ketocarbonyl- und β-Enaminocarbonylfunktionen,

b) metallhaltige Verbindung (II) ausgewählt aus der Gruppe Gruppe der Übergangsmetalle und der Lanthaniden sowie der 1., 2., 3. und 4. Hauptgruppe, außer dem in der 3. und 4. Hauptgruppe enthaltenen Bor und Kohlenstoff.

Bei den Polymeren handelt es sich vorzugsweise um Polyester, Polyamid, Polyether, Polyethylenoxid, bevorzugt sind Siloxanpolymere

Bei dem erfindungsgemäßen Siloxanpolymer, handelt es sich vorzugsweise um lineare Polysiloxane mit den funktionellen Gruppen an den Kettenenden oder an seitenständiger Position oder sowohl an den Kettenenden und als auch in seitenständiger Position.

Bevorzugt sind weiter verzweigte Polysiloxane mit den funktionellen Gruppen an den Kettenenden oder an seitenständiger Position oder sowohl an den Kettenenden als auch in seitenständiger Position oder zusätzlich an den Verzweigungsstellen oder nur an den Verzweigungsstellen handelt.

Besonders bevorzugt sind folgende:

β-Ketocarbonyl-funktionelle Siloxanpolymere, die mindestens einen dreiwertigen Rest **B** der allgemeinen Formel

$$-C(=O)-\overset{|}{C}R^3-C(=O)- \qquad (I)$$

enthalten, wobei

$R^3$ ein Wasserstoffatom oder ein einwertiger Kohlenwasserstoffrest mit 1 bis 30 Kohlenstoffatomen, vorzugsweise ein Wasserstoffatom bedeutet.

Beim Rest B in Formel (I) ist vorzugsweise höchstens eine der drei freien Valenzen an Heteroatome gebunden.

Bevorzugt enthalten die Siloxanpolymere mindestens 2 Reste B pro durchschnittlichem Molekül, bevorzugt 2 bis 20 Reste B, besonders bevorzugt 3 bis 10 Reste B. Die organischen Reste B sind an den Siloxanteil der Siloxanpolymere bevorzugt über Si-C-Gruppen gebunden.

Für den Fall, dass der dreiwertige Rest B mit keiner der freien Valenzen an Heteroatome gebunden ist, enthalten die erfindungsgemäßen Siloxanpolymere bevorzugt mindestens einen SiC-gebundenen Rest $\mathbf{B^1}$ ausgewählt aus der Gruppe der allgemeinen Formeln

$$-R^1-C(=O)-CR^3R^4-C(=O)-R^5 \qquad (II)$$

und

$$\begin{array}{c} | \\ R^{1} \\ | \\ R^{6}\text{-}C(=O)\text{-}CR^{3}\text{-}C(=O)\text{-}R^{7} \end{array} \qquad (III)$$

wobei $R^3$ die oben dafür angegebene Bedeutung hat,
$R^1$ ein zweiwertiger organischer Rest, vorzugsweise ein zweiwertiger organischer Rest mit 1 bis 20 Kohlenstoffatomen, der, außer in den Endpositionen, Heteroatome ausgewählt aus der Gruppe von Sauerstoff, Schwefel und Stickstoff enthalten kann, bevorzugt einen Kohlenwasserstoffrest mit 1 bis 20 Kohlenstoffatomen, besonders bevorzugt einen Kohlenwasserstoffrest mit 1 bis 4 Kohlenstoffatomen bedeutet,
$R^4$ ein Wasserstoffatom oder einen Kohlenwasserstoffrest mit 1 bis 30 Kohlenstoffatomen, vorzugsweise ein Wasserstoffatom ist, und
$R^5$, $R^6$ und $R^7$ jeweils ein Kohlenwasserstoffrest mit 1 bis 30 Kohlenstoffatomen bedeutet.

Die Reste $B^1$ der Formeln (II) bzw. (III) haben die Struktur eines substituierten Acetylacetons, welches über $R^1$ an ein Siloxanpolymer gebunden ist.

Für den Fall, dass der dreiwertige Rest B mit einer freien Valenz an Heteroatome gebunden ist, enthalten die erfindungsgemäßen Siloxanpolymere bevorzugt mindestens einen SiC-gebundenen Rest $\mathbf{B^2}$ ausgewählt aus der Gruppe der allgemeinen Formeln

$$-R^{1}\text{-}Y\text{-}C(=O)\text{-}CHR^{3}\text{-}C(=O)\text{-}CH_{2}R^{3} \qquad (IV)$$

und

$$-R^{1}\text{-}Y\text{-}C\ (=O)\text{-}CR^{3}=C(\text{-}OH)\text{-}CH_{2}R^{3} \qquad (V)$$

wobei $R^1$ und $R^3$ die oben dafür angegebene Bedeutung haben,
Y ein Sauerstoffatom oder ein Rest der Formel $-(NR^8-R^{1'})_z-NR^2-$ bedeutet,
wobei $R^{1'}$ die Bedeutung von $R^1$ hat,
$R^2$ ein Wasserstoffatom oder einen Kohlenwasserstoffrest mit 1 bis 18 Kohlenstoffatomen, vorzugsweise ein Wasserstoffatom bedeutet,
$R^8$ $R^2$ oder einen Rest der Formel $-C(=O)-CHR^3-C(=O)-CH^2R^3$ oder $-C(=O=CR^3=C(-OH)-CH_2R^3$ bedeutet,
z 0 oder eine ganze Zahl von 1 bis 10, vorzugsweise 0, 1 oder 2 ist.

Die Reste $B^2$ der Formeln (IV) und (V) sind über die Reste $R^1$ an das Siloxanpolymer gebunden.

Die Reste $B^2$ der Formeln (IV) und (V) sind tautomere Gruppen. Bevorzugt enthalten die erfindungsgemäßen Siloxanpolymere mindestens 2 Reste $B^2$ aus der Gruppe der Formeln (IV) und (V) pro Molekül, wobei sie nur Reste der Formel (IV), nur Reste der Formel (V) oder beide zusammen enthalten können. Da tautomere Gruppen ineinander umwandelbar sind, kann sich ihr jeweiliger Gehalt in Abhängigkeit von äußeren Bedingungen verändern. Deren Quotient kann daher in weiten Bereichen schwanken und Quotienten von ca. 1000:1 bis ca. 1:1000 betragen.

Der Enolgehalt der erfindungsgemäßen Siloxanpolymere führt zu einem schwach sauren Charakter dieser Stoffe, der maßgeblich von den Strukturparametern und Substituenten der Gruppe der allg. Formel (I) abhängt. Bevorzugt hat diese enolisierbare Gruppe einen pks-Wert von größer 5,0, besonders bevorzugt von 6,0 bis 15,0, speziell von 7,0 bis 14,0.

Die erfindungsgemäßen Siloxanpolymere enthalten vorzugsweise 5 bis 5000 Si-Atome, bevorzugt 50 bis 1000 Si-Atome pro Molekül. Sie können linear, verzweigt, dendrimer oder cyclisch sein. Mit in den Bereich der erfindungsgemäßen Siloxanpolymere fallen auch Netzwerkstrukturen beliebiger Größe, denen weder eine konkrete noch durchschnittliche Anzahl von Si-Atomen zuordenbar ist, sofern sie mindestens 2 funktionelle Gruppen B der Formel (I) enthalten.

Bevorzugt sind außerdem folgende:
β -Enaminocarbonyl-funktionelle Siloxanpolymere, die mindestens einen dreiwertigen Rest **E** der allgemeinen Formel

$$\begin{array}{c} | \\ -C(=O)\text{-}CR^{3}\text{-}C(=NR^{10})\text{-} \end{array} \qquad (XI)$$

bzw.

$$-C(=O)-\overset{|}{C}=C(NHR^{10})- \quad \text{falls } R^3=H$$

enthalten, wobei
$R^3$ ein Wasserstoffatom oder ein einwertiger Kohlenwasserstoffrest mit 1 bis 30 Kohlenstoffatomen, vorzugsweise ein Wasserstoffatom bedeutet und $R^{10}$ ein bevorzugt einwertiger organischer Rest ist. Der Rest E kann in der Iminform oder in der Enaminform existieren.

Beim Rest E in Formel (XI) ist vorzugsweise höchstens eine der drei freien Valenzen an Heteroatome gebunden.

Bevorzugt enthalten die Siloxanpolymere mindestens 2 Reste E pro durchschnittlichem Molekül, bevorzugt 2 bis 20 Reste E, besonders bevorzugt 3 bis 10 Reste E. Die organischen Reste E sind an den Siloxanteil der Siloxanpolymere bevorzugt über Si-C-Gruppen gebunden.

Für den Fall, dass der dreiwertige Rest E mit keiner der freien Valenzen an Heteroatome gebunden ist, enthalten die erfindungsgemäßen Siloxanpolymere bevorzugt mindestens einen SiC-gebundenen Rest $E^1$ ausgewählt aus der Gruppe der allgemeinen Formeln

$$-R^1-C(=O)-CR^3R^4-C(=NR^{10})-R^5 \qquad (XII)$$

bzw. $-R^1-C(=O)-CR^4=C(NHR^{10})-R^5$ falls $R^3=H$ und

$$R^6-C(=O)-\overset{\overset{|}{R^1}}{\overset{|}{C}}R^3-C(=NR^{10})-R^7 \qquad (XIII)$$

bzw.

$$R^6-C(=O)-\overset{\overset{|}{R^1}}{\overset{|}{C}}=C(NR^{10})-R^7 \quad \text{falls } R^3=H$$

wobei $R^3$ die oben dafür angegebene Bedeutung hat,
$R^1$ ein zweiwertiger organischer Rest, vorzugsweise ein zweiwertiger organischer Rest mit 1 bis 20 Kohlenstoffatomen, der außer in den Endpositionen Heteroatome ausgewählt aus der Gruppe von Sauerstoff, Schwefel und Stickstoff enthalten kann, bevorzugt einen Kohlenwasserstoffrest mit 1 bis 20 Kohlenstoffatomen, besonders bevorzugt einen Kohlenwasserstoffrest mit 1 bis 4 Kohlenstoffatomen bedeutet, $R^4$ ein Wasserstoffatom oder einen Kohlenwasserstoffrest mit 1 bis 30 Kohlenstoffatomen, vorzugsweise ein Wasserstoffatom ist, und
$R^5$, $R^6$ und $R^7$ jeweils ein Kohlenwasserstoffrest mit 1 bis 30 Kohlenstoffatomen bedeutet.

Die Reste $E^1$ der Formeln (XII) bzw. (XIII) haben die Struktur eines substituierten Acetylacetons, welches über $R^1$ an ein Siloxanpolymer gebunden ist.

Für den Fall, dass der dreiwertige Rest E mit einer freien Valenz an Heteroatome gebunden ist, enthalten die erfindungsgemäßen Siloxanpolymere bevorzugt mindestens einen SiC-gebundenen Rest $E^2$ ausgewählt aus der Gruppe der allgemeinen Formeln

$$-R^1-Y-C(=O)-CHR^3-C(=NR^{10})-CH_2R^3 \qquad (XIV)$$

und

$$-R^1-Y-C(=O)-CR^3=C(-NHR^{10})-CH_2R^3 \qquad (XV)$$

wobei $R^1$ und $R^3$ die oben dafür angegebene Bedeutung haben,
Y ein Sauerstoffatom oder ein Rest der Formel $-(NR^8-R^{1'})_z-NR^2-$ bedeutet,
wobei $R^{1'}$ die Bedeutung von $R^1$ hat,

$R^2$ ein Wasserstoffatom oder einen Kohlenwasserstoffrest mit 1 bis 18 Kohlenstoffatomen, vorzugsweise ein Wasserstoffatom bedeutet,

$R^8$ $R^2$ oder einen Rest der Formel $-C(=O)-CHR^3-C(=O)-CH_2R^3$, $-C(=O)-CR^3=C(-OH)-CH_2R^3$, $-C(=O)-CHR^3-C(=NHR^{10})-CH_2R^3$ oder $-C(=O)-CR^3=C(-NHR^{10})-CH_2R^3$ bedeutet,

z 0 oder eine ganze Zahl von 1 bis 10, vorzugsweise 0, 1 oder 2 ist.

Die Reste $E^2$ der Formeln (XIV) und (XV) sind über die Reste $R^1$ an das Siloxanpolymer gebunden.

Die Reste $E^2$ der Formeln (XIV) und (XV) sind tautomere Gruppen. Bevorzugt enthalten die erfindungsgemäßen Siloxanpolymere mindestens 2 Reste $E^2$ aus der Gruppe der Formeln (XIV) und (XV) pro Molekül, wobei sie nur Reste der Formel (XIV), nur Reste der Formel (XV) oder beide zusammen enthalten können. Da tautomere Gruppen ineinander umwandelbar sind, kann sich ihr jeweiliger Gehalt in Abhängigkeit von äußeren Bedingungen verändern. Deren Quotient kann daher in weiten Bereichen schwanken und Quotienten von ca. 1000:1 bis ca. 1:1000 betragen.

Die erfindungsgemäßen Siloxanpolymere enthalten vorzugsweise 5 bis 5000 Si-Atome, bevorzugt 50 bis 1000 Si-Atome pro Molekül. Sie können linear, verzweigt, dendrimer oder cyclisch sein. Mit in den Bereich der erfindungsgemäßen Siloxanpolymere fallen auch Netzwerkstrukturen beliebiger Größe, denen weder eine konkrete noch durchschnittliche Anzahl von Si-Atomen zuordenbar ist, sofern sie mindestens 2 funktionelle Gruppen E der Formel (I) enthalten.

Die erfindungsgemäßen β-Ketocarbonyl-funktionellen Siloxanpolymere sind vorzugsweise Organopolysiloxane aus Einheiten der allgemeinen Formel

$$X_aR_c(OR^9)_dSiO_{\frac{4-(a+c+d)}{2}} \qquad (VI),$$

wobei

X einen organischen Rest bedeutet, der den Rest B enthält, vorzugsweise ein SiC-gebundener Rest $B^1$ oder $B^2$ ist, wobei B, $B^1$ und $B^2$ die oben dafür angegebene Bedeutung haben,

R einen einwertigen, gegebenenfalls substituierten Kohlenwasserstoffrest mit 1 bis 18 Kohlenstoffatomen je Rest bedeutet,

$R^9$ ein Wasserstoffatom oder einen Alkylrest mit 1 bis 8 Kohlenstoffatomen, bevorzugt ein Wasserstoffatom oder einen Methyl- oder Ethylrest bedeutet,

a 0 oder 1,

c 0, 1, 2 oder 3 und

d 0 oder 1 ist,

mit der Maßgabe, dass die Summe $a+c+d \leq 3$ ist und
durchschnittlich mindestens ein Rest X je Molekül enthalten ist.

Bevorzugte Beispiele für die erfindungsgemäßen β-Ketocarbonylfunktionellen Siloxanpolymere sind Organopolysiloxane der allgemeinen Formel

$$X_gR_{3-g}SiO(SiR_2O)_1(SiRXO)_kSiR_{3-g}X_g \qquad (VIIa)$$

und

$$(R^9O)R_2SiO(SiR_2O)_n(SiRXO)_mSiR_2(OR^9) \qquad (VIIb)$$

wobei X, R und $R^9$ die oben dafür angegebene Bedeutung haben,

g 0 oder 1,

k 0 oder eine ganze Zahl von 1 bis 30 ist und

l 0 oder eine ganze Zahl von 1 bis 1000 ist,

m eine ganze Zahl von 1 bis 30 ist und

n 0 oder eine ganze Zahl von 1 bis 1000 ist,

mit der Maßgabe, dass durchschnittlich mindestens ein Rest X je Molekül enthalten ist.

Beispiele für Reste R sind sind Alkylreste, wie der Methyl-, Ethyl-, n-Propyl-, iso-Propyl-, 1-n-Butyl-, 2-n-Butyl-,

iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste $R^1$ sind

$-CH_2CH_2-$, $-CH(CH_3)-$, $-CH_2CH_2CH_2-$, $-CH_2C(CH_3)H-$, $-CH_2CH_2CH_2CH_2-$, $-CH_2CH_2CH(CH_3)-$ und $-CH_2CH_2C(CH_3)_2CH_2-$,

wobei der $-CH_2CH_2CH_2$-Rest bevorzugt ist.

Bevorzugt ist Rest $R^1$ ein Rest der Formel $-CH_2CH_2-$ und $-CH_2CH_2CH_2-$.

Beispiele für Reste $R^3$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Kohlenwasserstoffreste $R^3$ gelten auch für Kohlenwasserstoffreste $R^2$.

Beispiele für Kohlenwasserstoffreste $R^3$ gelten auch für Kohlenwasserstoffreste $R^4$, $R^5$, $R^6$ und $R^7$.

Beispiele für Kohlenwasserstoffreste $R^9$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest.

Die Reste $B^1$ der Formeln (II) bzw. (III) sind β-Diketongruppen, die entweder endständig, bezogen auf das Diketon (Formel (II)) oder am C-Atom zwischen den beiden Carbonylgruppen (Formel (III)) über $R^1$ an ein Siloxanpolymer gebunden sind.

Verfahren zur Herstellung von β-Ketocarbonyl-funktionellen Siloxanpolymeren mit Resten $B^1$ der Formel (II) sind aus der organischen Chemie bekannt. Bevorzugt werden sie über die Acylierung von Acetoacetaten mit Organosiliciumverbindungen, die Si-gebundene Säurechloride enthalten, erhalten. Wenn beispielsweise Siloxanpolymere, die Si-gebundenes Undecansäurechlorid ($R^1 = -C_{10}H_{20}-$) enthalten, mit Ethylacetoacetat ($CH_3-C(=O)-CH_2-C(=O)-O-CH_2CH_3$) umgesetzt werden (Acylierung) und danach thermisch $CO_2$ und Ethanol abgespalten werden, werden Siloxanpolymere erhalten, die Reste $B^1$ der Formel (II) enthalten mit $R^1 = -C_{10}H_{20}-$, $R^3 = H$, $R^4 = H$ und $R^5 = -CH_3$.

Verfahren zur Herstellung von β-Ketocarbonyl-funktionellen Siloxanpolymeren, die Reste $B^1$ der Formel (III) enthalten, sind in DE 1193504 A und DE 1795563 A beschrieben. Bevorzugt ist hierbei die Hydrosilylierung von Allylacetylaceton, wobei Siloxanpolymere, die Reste $B^1$ der Formel (III) enthalten, entstehen mit $R^1 = -C_3H_6-$, $R^3 = H$, $R^6 = R^7 = -CH_3$. Ein bevorzugtes Verfahren ist weiterhin die Alkylierung von Acetylaceton durch Siloxanpolymere mit Si-gebundenen Halogengruppen, wie $-CH_2Cl$, $-CH_2Br$, $-C_3H_6Cl$ oder $-C_3H_6J$.

Verfahren zur Herstellung von Siloxanpolymeren, die Reste $B^2$ der Formeln (IV) und (V) enthalten, sind in US 6,121,404 A beschrieben.

Vorzugsweise werden sie hergestellt, indem Diketene (1) der allgemeinen Formel

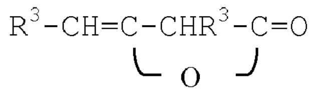 ,

wobei $R^3$ die oben dafür angegebene Bedeutung hat, bevorzugt ein Wasserstoffatom ist,

mit Organosiliciumverbindungen (2), die mindestens einen Si-gebundenen Rest A der allgemeinen Formel

$$-R^1-(NR^2-R^{1'})_z-NR^2_2 \qquad \text{(VIII)}$$

je Molekül enthalten, wobei $R^1$, $R^{1'}$, $R^2$ und z die oben dafür angegebene Bedeutung haben, umgesetzt werden, mit der Maßgabe, dass der Rest A der Formel (VIII) mindestens eine primäre und gegebenenfalls mindestens eine sekundäre Aminogruppe, vorzugsweise mindestens eine primäre Aminogruppe, aufweist.

Die Polymer-haltige Zusammensetzung enthält metallhaltige Verbindung (IX) vorzugsweise metallhaltige Verbindung (IX) ausgewählt aus der Gruppe der Übergangsmetalle und der Lanthaniden sowie der 1., 2., 3. und 4. Hauptgruppe, außer dem in der 3. und 4. Hauptgruppe enthaltenen Bor und Kohlenstoff. Bevorzugt sind Hauptgruppenelement-haltige Verbindungen der Elemente Ca, Mg, Al, Si und Nebengruppenelement-haltige Verbindungen der Elemente Ti, Zr, Cu, Zn, wobei Ti und Zr besonders bevorzugt sind.

Bevorzugt enthält die Zusammensetzung organische Komplexbildner (X), die mit den Verbindungen (IX) Komplexverbindungen eingehen, um die Polymerisation und Vernetzung zu steuern.

Bevorzugt handelt es sich bei dem zusätzlichen organischen Komplexbildner (X) um organische Verbindungen, die die Gruppierungen $-C(=O)-CR_2-C(=O)-$ oder $-C(=O)-CR_2-C(=NR)-$enthalten, vorzugsweise sind es unter 250°C, bevorzugt unter 200°C, besonders bevorzugt unter 180°C flüchtige Komplexbildner. Beispiele für Komplexbildner sind Acetylaceton, Methylacetoacetat, Ethylacetoacetat, wobei Ethylacetoacetat besonders bevorzugt ist.

Bevorzugt werden organische Komplexbildner (XIII) in einer Menge von 0,5 bis ca. 10 Mol, besonders bevorzugt von 1,0 bis ca. 6 Mol pro polymergebundenen Rest B eingesetzt.

Zusätzlich können weitere Additive (XVI) wie Lösemittel, Verdünner, Rheologieregler oder organische Polymere enthalten sein.

Aufgrund der durch die erfindungsgemäße Methode erreichbaren sehr hohen Molekulargewichte bzw. Viskositäten ist es aus Handhabungsgründen gegebenenfalls von Vorteil, Lösemittel zu verwenden, die die erfindungsgemäßen Zusammensetzungen verflüssigen. Dies können in Abhängigkeit der tatsächlichen Polaritäten alle bisher gebräuchlichen Lösemittel sein. Insbesondere sind dies Kohlenwasserstoffe wie Hexan-, Heptan- und Octanisomere, Benzinfraktionen, Toluol, Xylol, Alkylbenzole sowie höhere Homologe aliphatischer und aromatischer Niedrig- und Mittelsieder, Alkohole wie Methanol, Ethanol, Propanol, Isopropanol, Butanol, Octanol, 2-Ethylhexanol sowie ethoxylierte und propoxylierte Alkohole, Ketone wie Aceton, Butanon, Methylisobutylketon und Cyclohexanon, Ester wie Ethylacetat und Butylacetat, sowie auch Ester der höheren Homologen der Alkohol- wie auch der Säurebestandteile. Letztlich können auch Ether und Polyether verwendet werden, soweit diese in ihrer Polarität kompatibel sind.

Bevorzugte Einsatzmengen der Additive (XVI) sind von wenigen % bis zu etwa der 4-fachen Menge bezogen auf Polymer (I).

Eine bevorzugte Art der Herstellung erfindungsgemäßer Zusammensetzungen ist das Eindosieren von metallhaltiger Verbindung (IX) in das, gegebenenfalls verdünnte, Polymer (I). Besonders bevorzugt ist dabei die Verwendung einer Vorabmischung von Polymer (I) mit organischen Komplexbildnern (X), bevor die Verbindung (IX) zugesetzt wird. Es ist allerdings auch möglich, den organischen Komplexbildner (X) mit der metallhaltigen Verbindung (IX) zu mischen und diese Mischung zum Polymer zu dosieren.

Es ist bevorzugt, in Abhängigkeit von der Anzahl der Reste B bzw. E pro Polymermolekül (I), eine Menge an organischen Komplexbildnern (X) einzusetzen, die der 0,1 bis 20-fachen molaren Menge der Reste B bzw. E entspricht, besonders bevorzugt der gleichen bis ca. 10-fachen molaren Menge.

Druck und Temperatur können über einen weiten Bereich variiert werden. Es ist jedoch bevorzugt, die erfindungsgemäße Zusammensetzung im Temperaturbereich von ca. 10 - ca. 100°C herzustellen, besonders bevorzugt von 20 - 80°C.

Ein weiterer Gegenstand der Erfindung ist ein Verfahren zur Beschichtung, dadurch gekennzeichnet, dass die erfindungsgemäße Polymerhaltige Zusammensetzung verwendet wird.

Die erfindungsgemäßen Zusammensetzungen werden vorzugsweise als Beschichtungen eingesetzt, vorzugsweise zur Bladderbeschichtung in der Reifenindustrie. Des weiteren für Kosmetik, Homecareprodukte, wie Weichspüler, Textilien, zur Lederhydrophobierung etc.

Vorteile der erfindungsgemäßen Zusammensetzung ist ihre einfache und günstige Polymerisation.

**<u>Ausführungsbeispiele:</u>**

**<u>Beispiel 1:</u>**

50,0 g eines linearen Polydimethylsiloxans (PDMS) mit den Endgruppen der Formel $CH_3C(=O)-CH_2C(=O)-OC_2H_4OC(=O)-NHC_3H_6-$ und einem Molekulargewicht $M_n$ = 33400Da, sowie einer Viskosität von 4070 $mm^2/s$ werden mit 150,0 g Toluol verdünnt und mit 0,51 g Tetrabutyltitanat versetzt. Die Viskosität steigt sehr schnell an und erreicht in 30 Minuten 39 $mm^2/s$ (25°C). 5 g dieser Lösung werden auf einem Aluschälchen eingedampft: man erhält ein Polymer mit über 10.000.000 mPa·s, welches in Toluol wieder klar löslich ist. Durch den Titanatzusatz wird die Viskosität des eingesetzten Polymers auf mehr als den tausendfachen Wert erhöht.

**<u>Beispiel 2:</u>**

Zu 100,0 g eines linearen Polydimethylsiloxans mit den Endgruppen der Formel $CH_3C(=O)-CH_2C(=O)NHC_3H_6-$ und einem Molekulargewicht $M_n$ = 6000 Da, sowie einer Viskosität von 381 $mm^2/s$ werden 8,1 g einer 75%-igen Lösung

von Titan- bis (2,4-pentandionat)diisopropoxid in Isopropanol gegeben. Innerhalb von 3 Stunden bei 25°C steigt die Viskosität nur auf 397 $mm^2/s$. In einem Aluschälchen bilden 5 g dieses Produkts bei 70 °C innerhalb weniger Minuten einen festen Film, der in Toluol wieder klar löslich ist.

**Beispiel 3:**

100,0 g eines OH-terminierten PDMS, welches N-Cyclohexylacetoacetamidomethyl-methylsiloxyeinheiten in einer Konzentration von 0,167 mEquiv./g enthält und eine Viskosität von 840 $mm^2/s$ (25 °C) hat, werden mit der gleichen Menge Toluol verdünnt. In diese Lösung werden tropfenweise 1,52 g Titan-bis(2,4-pentandionat)-diisopropoxid gelöst in 4,0 g Isopropanol dosiert. Nach 3 Stunden Rührzeit bei 25 °C erreicht die Lösung eine Viskosität von 295 $mm^2/s$. 5 g der klaren, homogenen Lösung werden in einem Aluschälchen bei 70 °C eingedampft. Man erhält einen festen, klaren Siliconfilm, der in Toluol nicht mehr löslich ist. Das eingesetzte Acetoacetamido-PDMS ist nach dem Eindampfen der Lösung zu einem 3-dimensionalen Netzwerk vernetzt, dessen Verknüpfungspunkte aus Titanchelatkomplexen besteht.

**Beispiel 4:**

100,0 g einer 50%-igen Lösung eines OH-terminierten PDMS in Toluol, welche bei einer Viskosität von 2350 $mm^2/s$ (25°C) eine Konzentration an N-Cyclohexylacetoacetamidomethyl-methylsiloxyeinheiten von 0,027 mEquiv./g enthält, werden mit 150 g Toluol auf einen Festgehalt von 20 % verdünnt. Das Acetoacetamidosiloxan selbst hat als lösemittelfreies Polymer eine Viskosität von 190 Pa•s (25°C). Nacheinander werden in diese Verdünnung bei 25°C 5,71 g Ethylacetoacetat und 0,33 g einer 80%-igen Lösung Zirkoniumbutylat dosiert, die während dessen gut gerührt wird, um die beiden Stoffe möglichst schnell homogen zu verteilen. Nach einer Rührzeit von insgesamt zwei Stunden erhält man eine klare Lösung mit einer Viskosität von 7100 $mm^2/s$ (25°C).

Eine Probe dieser Lösung wird in einer Nassschichtstärke von ca. 5$\mu$ auf Papier gerakelt und abgelüftet. Im Trockenschrank bei 150°C nur 10 Sekunden behandelt, erhält man eine ausvulkanisierte Siliconbeschichtung. Lineare PDMS-Ketten sind über Zirkonchelatkomplexe vernetzt.

**Patentansprüche**

1. Polymerhaltige Zusammensetzung enthaltend:

   a) Polymer (I) enthaltend mindestens zwei funktionelle Gruppen ausgewählt aus der Gruppe $\beta$-Ketocarbonyl- und $\beta$-Enaminocarbonylfunktionen,
   b) metallhaltige Verbindung (II) ausgewählt aus der Gruppe der Übergangsmetalle und der Lanthaniden sowie der 1., 2., 3. und 4. Hauptgruppe, außer dem in der 3. und 4. Hauptgruppe enthaltenen Bor und Kohlenstoff.

2. Polymerhaltige Zusammensetzung, **dadurch gekennzeichnet, dass** es sich bei dem Polymer, um eines aus der Gruppe handelt, die aus Polyester, Polyamid, Polyether, Polyethylenoxid Siloxanpolymer besteht.

3. Polymerhaltige Zusammensetzung nach Anspruch 2, **dadurch gekennzeichnet, dass** es sich bei dem Siloxanpolymer, um lineare Polysiloxane mit den funktionellen Gruppen an den Kettenenden oder and an seitenständiger Position oder sowohl an den Kettenenden und als auch in seitenständiger Position handelt.

4. Polymerhaltige Zusammensetzung nach Anspruch 2, **dadurch gekennzeichnet, dass** es sich bei dem Siloxanpolymer, um verzweigte Polysiloxane mit den funktionellen Gruppen an den Kettenenden oder an seitenständiger Position oder sowohl an den Kettenenden als auch in seitenständiger Position oder zusätzlich an den Verzweigungsstellen oder nur an den Verzweigungsstellen handelt.

5. Polymerhaltige Zusammensetzung nach einem der Ansprüche 1 bis 4, **dadurch gekennzeichnet, dass** es sich bei der metallhaltigen Verbindung (IX) um metallhaltige Verbindung (IX) ausgewählt aus der Gruppe der 1., 2., 3. und 4. Hauptgruppe, außer Bor und Kohlenstoff, den Übergangsmetallen und den Lanthaniden, handelt.

6. Polymerhaltige Zusammensetzung nach einem der Ansprüche 1 bis 5, **dadurch gekennzeichnet, dass** es sich bei der metallhaltigen Verbindung (IX) um Hauptgruppenelement-haltige Verbindungen der Elemente Ca, Mg, Al, Si und
   Nebengruppenelement-haltige Verbindungen der Elemente Ti, Zr, Cu, Zn handelt.

7. Polymerhaltige Zusammensetzung nach einem der Ansprüche 1 bis 6, **dadurch gekennzeichnet, dass** sie zusätzlich organische Komplexbildner (X), die mit den Verbindungen (IX) Komplexverbindungen eingehen können, enthält.

8. Polymerhaltige Zusammensetzung nach einem der Ansprüche 1 bis 7, **dadurch gekennzeichnet, dass** es sich bei dem zusätzlichen organischen Komplexbildner (X) um Organische Verbindungen handelt, die die Gruppierungen $-C(=O)-CR_2-C(=O)-$ oder $-C(=O)-CR_2-C(=NR)-$ enthalten.

9. Verfahren zur Beschichtung, **dadurch gekennzeichnet, dass** Polymerhaltige Zusammensetzung nach den Ansprüchen 1 bis 8 verwendet werden.

Europäisches Patentamt

# EUROPÄISCHER RECHERCHENBERICHT

Nummer der Anmeldung
EP 07 11 3750

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 952 443 A (WILT TRUMAN F [US] ET AL) 14. September 1999 (1999-09-14)<br>* Beispiele 10,11,13 *<br>* Ansprüche 1-3,6 *<br>----- | 1-9 | INV.<br>C08K3/00<br>C08G77/38<br>C09D183/06 |
| X | US 4 808 649 A (GAY MICHEL [FR] ET AL) 28. Februar 1989 (1989-02-28)<br>* Beispiele 11-14 *<br>* Ansprüche 1,5 *<br>----- | 1-6 | |
| X | US 5 288 802 A (WALTERS DAVID N [US] ET AL) 22. Februar 1994 (1994-02-22)<br>* Beispiele I,III-VI *<br>----- | 1,2,5-9 | |
| X | US 4 408 018 A (BARTMAN BENJAMIN [US] ET AL) 4. Oktober 1983 (1983-10-04)<br>* Beispiele 2-6; Tabelle I *<br>----- | 1,2,6,9 | |
| A | US 4 861 839 A (MIZUGUCHI KATSUMI [JP] ET AL) 29. August 1989 (1989-08-29)<br>* Ansprüche *<br>----- | 1-9 | RECHERCHIERTE SACHGEBIETE (IPC) |
| A | US 3 668 183 A (HOY KENNETH LOOK ET AL) 6. Juni 1972 (1972-06-06)<br>* Ansprüche 1,2 *<br>----- | 1,9 | C08G<br>C08K<br>C09D |
| A | US 4 981 986 A (YOSHIOKA HIROSHI [JP] ET AL) 1. Januar 1991 (1991-01-01)<br>* Spalte 9, Zeile 5 - Zeile 21 *<br>* Ansprüche *<br>----- | 1 | |
| P,A | WO 2007/060089 A (WACKER CHEMIE AG [DE]; HERZIG CHRISTIAN [DE]) 31. Mai 2007 (2007-05-31)<br>* Ansprüche *<br>----- | 1-9 | |

Der vorliegende Recherchenbericht wurde für alle Patentansprüche erstellt

| Recherchenort | Abschlußdatum der Recherche | Prüfer |
|---|---|---|
| München | 6. November 2007 | Russell, Graham |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 07 11 3750

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2007

| Im Recherchenbericht angeführtes Patentdokument | Datum der Veröffentlichung | Mitglied(er) der Patentfamilie | Datum der Veröffentlichung |
|---|---|---|---|
| US 5952443 A | 14-09-1999 | AU 726988 B2 | 30-11-2000 |
| | | AU 8514198 A | 22-02-1999 |
| | | BR 9810974 A | 02-01-2002 |
| | | CA 2298465 A1 | 11-02-1999 |
| | | EP 1000110 A1 | 17-05-2000 |
| | | WO 9906471 A1 | 11-02-1999 |
| | | US 6054535 A | 25-04-2000 |
| US 4808649 A | 28-02-1989 | BR 8704056 A | 12-04-1988 |
| | | DE 3765072 D1 | 25-10-1990 |
| | | EP 0263038 A1 | 06-04-1988 |
| | | FR 2602776 A1 | 19-02-1988 |
| | | GR 3000952 T3 | 10-12-1991 |
| US 5288802 A | 22-02-1994 | AT 168406 T | 15-08-1998 |
| | | AU 671896 B2 | 12-09-1996 |
| | | AU 5803594 A | 15-08-1994 |
| | | CA 2154151 A1 | 04-08-1994 |
| | | DE 69319744 D1 | 20-08-1998 |
| | | DE 69319744 T2 | 18-02-1999 |
| | | EP 0680502 A1 | 08-11-1995 |
| | | ES 2121182 T3 | 16-11-1998 |
| | | JP 2690402 B2 | 10-12-1997 |
| | | JP 8501124 T | 06-02-1996 |
| | | KR 100228939 B1 | 01-11-1999 |
| | | MX 9400656 A1 | 29-07-1994 |
| | | NZ 259270 A | 26-05-1997 |
| | | WO 9417148 A1 | 04-08-1994 |
| US 4408018 A | 04-10-1983 | KEINE | |
| US 4861839 A | 29-08-1989 | AU 602093 B2 | 27-09-1990 |
| | | AU 1772988 A | 15-12-1988 |
| | | CA 1291147 C | 22-10-1991 |
| | | DE 3887388 D1 | 10-03-1994 |
| | | DE 3887388 T2 | 30-06-1994 |
| | | EP 0295657 A2 | 21-12-1988 |
| | | JP 63313793 A | 21-12-1988 |
| US 3668183 A | 06-06-1972 | KEINE | |
| US 4981986 A | 01-01-1991 | DE 3879247 D1 | 22-04-1993 |
| | | DE 3879247 T2 | 12-08-1993 |
| | | EP 0286387 A2 | 12-10-1988 |
| | | JP 1730001 C | 29-01-1993 |
| | | JP 4020439 B | 02-04-1992 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 07 11 3750

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2007

| Im Recherchenbericht angeführtes Patentdokument | Datum der Veröffentlichung | Mitglied(er) der Patentfamilie | Datum der Veröffentlichung |
|---|---|---|---|
| US 4981986 A | | JP 63250390 A | 18-10-1988 |
| WO 2007060089 A | 31-05-2007 | DE 102005056050 A1 | 31-05-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6469134 B2
- DE 1193504 A
- DE 1795563 A
- US 6121404 A


### In der Beschreibung aufgeführte Nicht-Patentliteratur


- *PMSE-Preprints,* 2002, vol. 86, 68
- *PMSE-PREPRINTS,* 2002, vol. 87, 209